# EUROPEAN PATENT APPLICATION

(11) **EP 4 718 041 A1**
(43) Date of publication of application: **01.04.2026**
(21) Application number: 24202704.3
(22) Date of filing: 25.09.2024
(51) Int. Cl.: G01F 15/14

(54) **SEALED GAS METER CASING**

(71) Applicant: Apator Metrix Spolka Akcyjna, 83-110 Tczew (PL)
(72) Inventor: Babraj, Grzegorz, 80-180 Gdansk (PL)
(74) Representative: Wroblewski, Marcin Jan

(57) **Abstract**

The object of the invention is a flanged joint of two parts of a casing subjected to internal pressure, especially a gas meter casing, in which a first casing part (2) has a distal end (4), and a second casing part (3) comprises an outer circumferential flange (6), and a sealing compound (7) is located between the first casing part (2) and the second casing part (3), characterised in that the first casing part (2) has a circumferential groove (5), while the flange of the second casing part (3) has a flange fold surrounding the distal end (4) of the first casing part (2) and reaching the circumferential groove (5), and the sealing compound (7) is placed in a space defined by the surface of the distal end (4) of the first casing part (2) and the inner surface of the flange fold of the second casing part (3). The invention also relates to a production method for a flanged joint of two parts of a casing subjected to internal pressure.

## Description

The object of the invention is a flanged joint of two parts of a casing subjected to internal pressure, especially a gas meter casing. The invention is found useful when making joints between parts forming a casing adjusted to the flow of pressurised fluids, especially gases. The invention is also found useful in devices for measuring the volume of flowing gases, and in other types of flow meters comprising casings consisting of parts.

Such devices usually have casings consisting of a plurality of parts and/or elements, which may be made, for example, of metals or alloys thereof. All parts and/or elements of such casings may be joined by the flanged joint being the object of the invention. In particular, the flanged joint may be used to join two parts of a casing, for example a body and a cover, or it may be used to join the body with a lower and upper cover.

Casings subjected to internal pressure must ensure tightness for pressures of considerable values. Gas meters, and in particular gas meter casings, must fulfil restrictive requirements related to safety and tightness of joined parts of the casing. In accordance with the EN 1359 standard, the working pressure of bellows gas meters does not exceed 0.5 bar. Moreover, in accordance with the requirements of said standard, gas meters must fulfil fire resistance requirements in a temperature of 650°C at 0.1 bar.

In prior art, there are known gas meter casings comprising mutually joined parts. For example, GB2127911A discloses a gas meter casing comprising a lower part and a cover part, both having outwardly-turned flanges. After assembly, a butt joint is formed by the flanges of the casing parts, which are then arranged parallel with respect to each other. A flange of a valve plate is placed between the flange of the lower part and the flange of the cover part, and the joint between these three flanges is additionally sealed to be gas tight. To this end, the flange of the valve plate of the gas meter is formed at a slight angle ranging from 5° to 7°, and it is inclined toward the flanges of the lower part and the cover part. Additionally, before assembly, beads of a silicone rubber sealing material are formed on the flanges of the lower part and the cover part. The beads of sealing material are deposited on the inner surfaces of these flanges, meaning the surfaces contacting the flange of the valve plate once joined. Before the sealing material is fully set, the casing parts are joined and the flanges are urged toward one another, so that the beads of sealing material flow out and the sealing material spreads between the surfaces of the flange of the lower part and the cover part, and the surface of the flange of the valve plate. An extensive sealed area is then formed between the surfaces of the flanges. The direction in which the gasketing material flows between the flange of the base part and the flange of the cover part is defined by the inclined flange of the valve plate of the gas meter. The sealing material flows into two gaps having in which have a cross-sectional shape of a triangle. The narrow parts of the gaps provides a minimum probability of gas leaks, while the thicker parts of the gaps provide a thicker portion of gasketing material and protect the gas meter against mechanical damage, for instance due to the gas meter being knocked. Also, a band having a cross-sectional shape resembling the letter U is pressed over the joined flanges from the outer side of the gas meter.

PL219315B1 discloses a joint of two parts of a gas meter casing subjected to internal pressure. Both gas meter casing parts have circumferential external flanges, which forms a mutual butt joint. A circumferential band is tightened on these outer flanges of both parts of the gas meter. The circumferential flange of one of the parts of the gas meter casing has a shaped bend or embossing, so that a pocket is formed between the joined flanges, which is defined by the surfaces of both circumferential flanges, and into which a sealing compound is inserted. The circumferential band closing the butt joint of the flanges has a shorter and a longer end. The shorter end overlaps the shaped bend or embossing in one of the flanges, whereas the longer end of the band extends over a larger area of the second flange.

Gas meters having casings consisting of two mutually joined parts have large external dimensions, resulting primarily from the presence of folded outer flanges and an additional band which connects them. The use of bands to connect the casing parts of gas meters also increases the consumption of materials during the production of gas meters. Moreover, during tests in high temperatures, bands connecting the casing parts of gas meters open, which results in unsealing the gas meter casing. Therefore, known casings do not have sufficient temperature resistance, which may lead to their unsealing during long-lasting operation in elevated temperatures.

The purpose of the invention is to solve technical problems resulting from the risk of unsealing a flanged joint between two parts of a casing subjected to internal pressure, and to completely eliminate an additional element in the form of a band connecting the casing parts. A further purpose of the invention is to solve technical problems resulting from the large external dimensions of a casing subjected to internal pressure and comprising a flanged joint between parts, especially the large external dimensions of gas meters, which directly contribute to difficulties in the assembly of gas meters, especially in places with limited space.

The object of the invention is a flanged joint of two parts of a casing subjected to internal pressure, especially a gas meter casing, in which a first casing part has a distal end, and a second casing part comprises an outer circumferential flange, and a sealing compound is located between the first casing part and the second casing part. The essence of the invention is in that the first casing part has a circumferential groove, while the flange of the second casing part has a flange fold surrounding the distal end of the first casing part and reaching the circumferential groove, and the sealing compound is placed in a space defined by the surface of the distal end of the first casing part and the inner surface of the flange fold of the second casing part.

Preferably, the distal end of the first casing part has a fold formed behind the circumferential groove.

Preferably, the space for the sealing compound is limited by the surface of the distal end of the first casing part which is opposite to the surface of the first casing part, in which the circumferential groove is located.

Preferably, a distance between the surface of the distal end of the first casing part which is opposite with respect to the surface of the first casing part in which the circumferential groove is located, and a portion of the inner surface of the flange fold of the second casing part, corresponds to the depth of the circumferential groove of the first casing part.

Preferably, the portion of the flange of the second casing part before the flange fold in cross-section is bent at an obtuse angle, forming a recess for simplifying the preparation of the flange fold surrounding the distal end of the first casing part.

The object of the invention is also a gas meter comprising the casing consisting of parts joined by the flanged joint according to the first aspect of the invention.

Preferably, the gas meter casing comprises at least two parts, wherein the first casing part constitutes a rear casing, and the second casing part constitutes a front casing.

Preferably, in the first casing part of the gas meter there are a gas inlet port and a gas outlet port, and the second casing part comprises mounting pins and a communication terminal.

Preferably, the gas meter comprises a masking element protecting the area of the flanged joint of the first casing part and the second casing part.

Preferably, the first casing part constituting the rear casing has a cross-sectional shape resembling the letter U, and it is arranged horizontally, and the second casing part constituting the front casing has a rectangular shape and comprises a central recess.

The object of the invention is also a method of producing a flanged joint of two parts of a casing subjected to internal pressure, especially a gas meter casing, characterised in that in the first step a circumferential groove is made in the first casing part, and subsequently, in the second step, a flange fold is made in the second casing part, following which, in the third step, a sealing compound is applied onto the inner surface of the flange fold of the second casing part, and afterwards, in the fourth step, the flange fold of the second casing part is placed over the distal end of the first casing part, so that the flange fold of the second casing part surrounds the distal end of the first casing part, and afterwards, in the fifth step, the flange fold of the second casing part is bent and clamped on the distal end of the first casing part, so that the flange fold of the second casing part reaches the circumferential groove, and the distal end of the first casing part becomes surrounded.

Preferably, the first step or the second step are preceded by a step in which a fold is made on the distal end of the first casing part.

Preferably, a portion of the flange of the second casing part before the flange fold is bent at an obtuse angle, forming a recess simplifying the application of the sealing compound.

The primary advantage of the flanged joint according to the invention and a gas meter with a casing having such joint is maintaining high tightness of the joint and increasing its fire resistance, with simultaneous reduced consumption of materials resulting from the elimination of a band connecting specific casing parts. The elimination of the band directly translates into reduced consumption of materials during the production process. The flanged joint itself comprises a flange fold of the second casing part, surrounding the distal end of the first casing part, thus providing high tightness of such a joint, and protecting the sealing material against flowing out to the outside. Moreover, the flange fold of the second casing part protects the joint against opening due to the effect of high temperature. This results in maintaining tightness of the joint even during long-lasting exposure to high temperature.

Additionally, elimination of a band connecting the flanges, present in solutions known from prior art, results in a reduction in the dimensions of mutually joined parts of a casing subjected to internal pressure, especially a gas meter casing.

The sealing compound present in the space defined by the surface of the distal end of the first casing part and the inner surface of the flange fold of the second casing part is present substantially inside the casing, which also favours maintaining tightness of the joint, and the sealing compound does not spread to the outside. An area where the sealing compound is applied before making a flanged joint is defined by bending the portion of the flange of the second casing part before the flange fold at an obtuse angle, and by forming a recess. The formed recess simplifies and expedites application of the sealing compound considerably. This simplifies the production process and limits the risk of the occurrence of errors.

Using the flanged joint according to the invention in a gas meter results in a compact and small casing with limited outer dimensions, which as a further consequence simplifies the assembly of the gas meter in places with limited space and access, especially in meter boxes and cabinets. In particular, in such structure, the first casing part may constitute a main casing part of the gas meter, in which there are a gas inlet port and an outlet port, and which is adjusted to house the measurement unit of the gas meter. The second casing part may then serve a function similar to a cover closing the first casing part, and be adjusted to connect a volume counter for the flowing gas and the remaining gas meter hardware, including for example a pulse transmitter. Particularly good results are achieved when the first casing part constituting a rear casing has a cross-sectional shape resembling the letter U, and it is arranged horizontally, and the second casing part constituting a front casing has a rectangular shape and comprises a central recess. Due to this, the rear casing houses all components of the gas meter, and the counter and hardware of the gas meter enter the recess in the second casing part. Then, the outer dimensions of the gas meter are even more reduced, since the joint between the casing parts is located in the vertical plane of the gas meter, on one of its side walls.

The use of a masking element for the joint area of the first casing part and the second casing part allows for improving the aesthetic qualities of the gas meter, and for protecting the joint area of the first casing part and the second casing part against possible mechanical damage, or the effect of external factors.

The invention is presented in embodiments and in the drawing, which presents in:

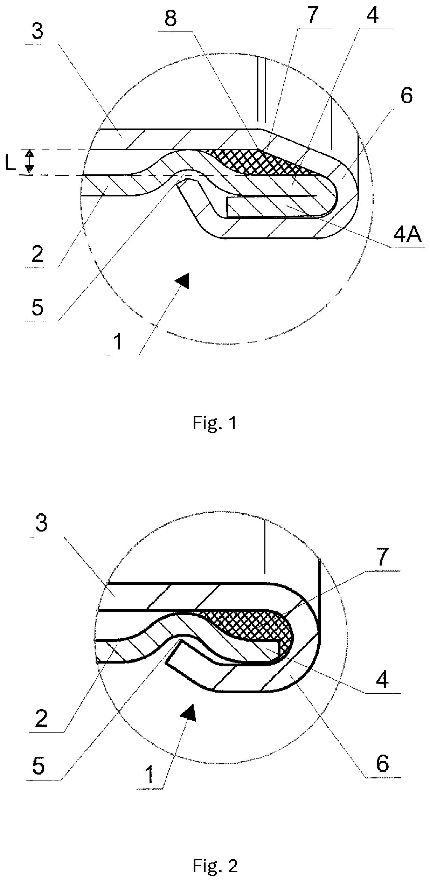

- Fig. 1-: a cross-section of a flanged joint of two parts of a casing subjected to internal pressure in a first embodiment,
- Fig. 2-: a cross-section of a flanged joint of two parts of a casing subjected to internal pressure in a second embodiment,

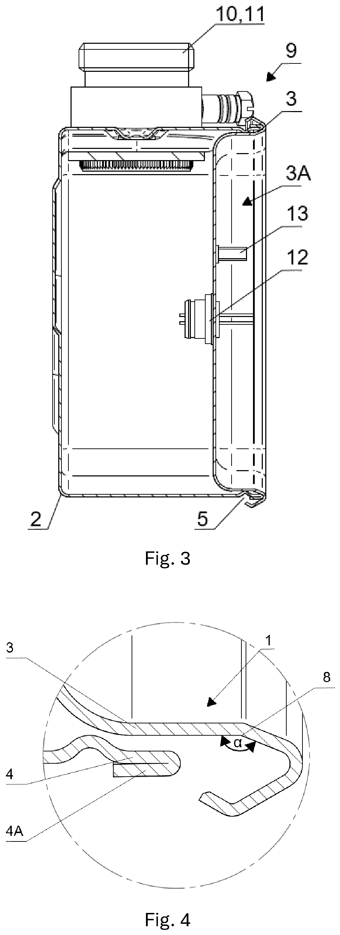

- Fig. 3-: a cross-section of a gas meter casing before assembling the gas meter casing parts,
- Fig. 4-: a cross-section of the joint area of the gas meter casing parts before assembling the gas meter casing parts,

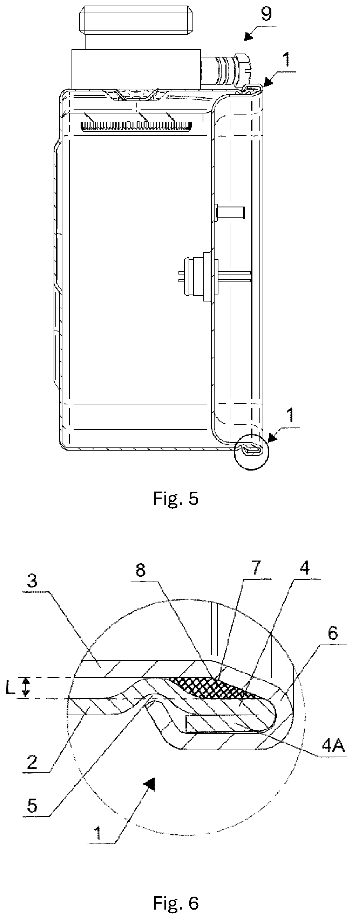

- Fig. 5-: the gas meter in a side view with a partial cross-section,
- Fig. 6-: a cross-section of the joint area of the gas meter casing parts after assembling the gas meter casing parts,

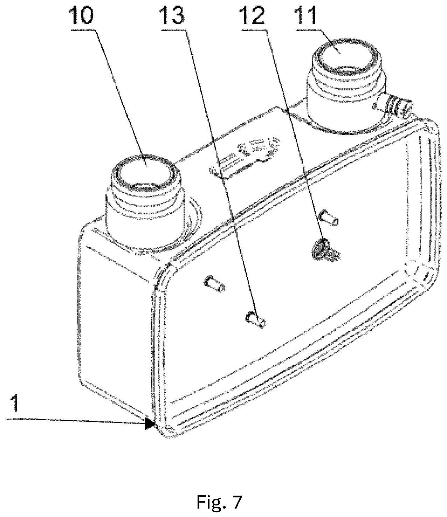

- Fig. 7-: the gas meter in a perspective view,

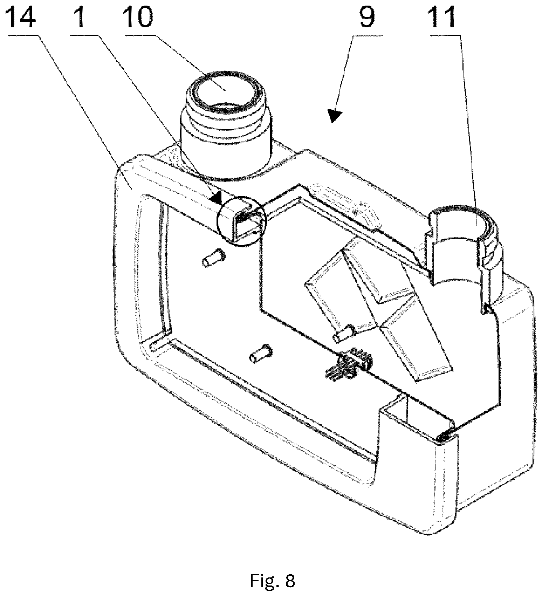

- Fig. 8-: the gas meter in a perspective view with a masking element, with a partial cross-section.

### First embodiment

In the first embodiment, a flanged joint 1 was made between two parts of a casing subjected to internal pressure: between a first casing part 2 and a second casing part 3. The first casing part 2 has a distal end 4 and a circumferential groove 5 located before the distal end 4. On the distal end 4, the first casing part 2 has a fold 4A made behind the circumferential groove 5. While, the second casing part 3 has an outer circumferential flange 6 with a flange fold. The flange fold of the flange 6 surrounds the distal end 4 with the fold 4A of the first casing part 2, and reaches the circumferential groove 5.

A sealing compound 7 is located between the first casing part 2 and the second casing part 3. Adhesives and compounds known in prior art which result in sealing the joint can be used as the sealing compound 7. The sealing compound 7 is placed in a space defined by the surface of the distal end 4 of the first casing part 2 and the inner surface of the flange fold in the flange 6 of the second casing part 3. The portion of the flange 6 of the second casing part 3 before the flange fold has a cross-sectional shape bent at an obtuse angle α, which in the embodiment is 160°, forming a recess 8 simplifying application of the sealing compound 7.

The distance L between the surface of the distal end 4 of the first casing part 2 lying on the opposite side with respect to the surface of the first casing part 2 with the circumferential groove 5, and the portion of the inner surface of the fold of the second casing part 3, corresponds to the depth of the circumferential groove 5 of the first casing part 2.

When making the flanged joint 1, in the first step the circumferential groove 5 was embossed in the first casing part 2. Subsequently, the fold 4A was made on the distal end 4 of the first casing part 2, in an area behind the circumferential groove 5.

The flange 6 and the flange fold of the second casing part 3 were made in the following step. In this step, the portion of the flange 6 of the second casing part 3 before the flange fold was bent at an obtuse angle α, which in the embodiment is 160°, forming the recess 8 for the sealing compound 7, where the sealing compound 7 was applied. Next, the flange fold of the second casing part 3 was put over the distal end 4 of the first casing part 2, so that the flange fold of the second casing part 3 surrounded the distal end 4 of the first casing part 2. Following this step, the flange fold of the second casing part 3 was bent and clamped on the distal end 4 of the first casing part 3, so that the flange fold of the second casing part 3 reached the circumferential groove 5. In this manner, the distal end 4 of the first casing part 2 was tightly surrounded.

### Second embodiment

In the second embodiment, a flanged joint 1 was made between two parts of a casing subjected to internal pressure: between a first casing part 2 and a second casing part 3. The first casing part 2 has a distal end 4 and a circumferential groove 5 located before the distal end 4, whereas the second casing part 3 has an outer circumferential flange 6 with a flange fold. The flange fold of the flange 6 surrounds the distal end 4 of the first casing part 2, and reaches the circumferential groove 5.

A sealing compound 7 is located between the first casing part 2 and the second casing part 3. Adhesives and compounds known in prior art which result in sealing the joint can be used as the sealing compound 7. The sealing compound 7 is placed in a space defined by the surface of the distal end 4 of the first casing part 2 and the inner surface of the flange fold in the flange 6 of the second casing part 3.

The distance L between the surface of the distal end 4 of the first casing part 2 lying on the opposite side with respect to the surface of the first casing part 2 with the circumferential groove 5, and the portion of the inner surface of the flange fold of the second casing part 3, corresponds to the depth of the circumferential groove 5 of the first casing part 2.

### Third embodiment

The gas meter 9 has a casing comprising a first casing part 2 and a second casing part 3. A flanged joint 1 is made between these two casing parts, and the casing consisting of the parts is subjected to internal pressure. In this embodiment, the gas meter 9 is a static gas meter with maximum working pressure of 0.5 bar. The first casing part 2 constitutes a rear casing of the gas meter 9, and the second casing part 3 constitutes a front casing. In the first casing part 2 there are a gas inlet port 10 and a gas outlet port 11. The gas meter 9 comprises a measurement system, whose structural details are not presented in the drawing.

The first casing part 2 constituting the rear casing of the gas meter 9 has a cross-sectional shape resembling the letter U with horizontally arranged arms, and the second casing part 3 constituting the front casing has a rectangular shape and comprises a central recess 3A. The central recess 3A is adapted to have a counter mounted therein for the volume of gas flowing across the measurement system. To this end, in the central recess 3A there are a communication terminal 12 and mounting pins 13.

A flanged joint 1 is made between the first casing part 2 and the second casing part 3. The first casing part 2 has a circumferential groove 5 located near its outer edges constituting a distal end 4. The distal end 4 of the first casing part 2 has a fold 4A behind the groove 5. This fold 4A of the first casing part 2 is surrounded by a flange fold of the second casing part 3. The flange fold of the second casing part 3 reaches up to the circumferential groove 5 in the first casing part 2, so that the fold 4A is completely surrounded by the material of the second casing part 3.

A sealing compound 7 is present between the fold 4A of the first casing part 2 and the flange fold of the second casing part 3. The sealing compound 7 is placed between the surface of the distal end 4 of the first casing part 2 lying on the opposite side with respect to the fold 4A of this first casing part 2, and a portion of the inner surface of the flange fold of the second casing part 3. Therefore, the sealing compound 7 is placed between two ends forming the casing joint. In order to simplify application of the sealing compound 7 during the production process, the portion of the flange 6 of the second casing part before its flange fold has a cross-sectional shape bent at an obtuse angle α, which in the embodiment is 160°. Such bending of the flange 6 of the second casing part 3 forms a recess 8, where the sealing compound 7 is applied directly before both casing parts are joined. A single-component polyurethane sealant, subsequently forming a permanent and flexible seal, is used as the sealing compound 7. Adhesives and compounds known in prior art which result in sealing the joint can be used as the sealing compound 7.

The distance L between the surface of the first casing part 2 lying on the opposite side with respect to the fold 4A of the distal end 4 of this first casing part 2, and the portion of the inner surface of the flange fold of the second casing part 3, corresponds to the depth of the circumferential groove 5 of the first casing part 2. The joint between the first casing part 2 and the second casing part 3 made in this manner does not have sharp edges, which could pose a risk of injury when using the gas meter. An increase in the depth of the groove 5 would also translate into the ability to apply a larger amount of the sealing compound 7.

The recess 8 is not necessary to apply the sealing compound 7, but it simplifies the production process, and it limits the risk of incorrect application of the sealing compound 7. In other equally good embodiments, the sealing compound may be placed between the surface of the first casing part 2 lying on the opposite side with respect to the fold 4A of the distal end 4 of this first casing part 2, and the portion of the inner surface of the flange fold of the second casing part 3. In such embodiments, the flange fold of the second casing part 3 may also be bent and tightly surround the fold 4A of the first casing part 2.

In an embodiment, the gas meter 9 is also provided with a masking element 14 surrounding the area of the flanged joint 1 of the first casing part 2 and the second casing part 3. The masking element 14 serves a function protecting the joint area against mechanical damage and the impact of weather, and it serves aesthetic functions.

## Claims

1. A flanged joint of two parts of a casing subjected to internal pressure, especially a gas meter casing, in which a first casing part (2) has a distal end (4), and a second casing part (3) comprises an outer circumferential flange (6), and a sealing compound (7) is located between the first casing part (2) and the second casing part (3), **characterised in that** the first casing part (2) has a circumferential groove (5), while the flange of the second casing part (3) has a flange fold surrounding the distal end (4) of the first casing part (2) and reaching the circumferential groove (5), and the sealing compound (7) is placed in a space defined by the surface of the distal end (4) of the first casing part (2) and the inner surface of the flange fold of the second casing part (3).

2. The flanged joint of two parts of the casing subjected to internal pressure according to claim 1, **characterised in that** the distal end (4) of the first casing part (2) has a fold (4A) formed behind the circumferential groove (5).

3. The flanged joint of two parts of the casing subjected to internal pressure according to claim 1 or 2, **characterised in that** the space for the sealing compound (7) is limited by the surface of the distal end (4) of the first casing part (2) which is opposite to the surface of the first casing part (2) in which the circumferential groove (5) is located.

4. The flanged joint of two parts of the casing subjected to internal pressure according to any of the claims from 1 to 3, **characterised in that** a distance (L) between the surface of the distal end (4) of the first casing part (2) which is opposite to the surface of the first casing part (2) in which the circumferential groove (5) is located, and the portion of the inner surface of the flange fold of the second casing part (3), corresponds to the depth of the circumferential groove (5) of the first casing part (2).

5. The flanged joint of two parts of the casing subjected to internal pressure according to any of the claims from 1 to 4, **characterised in that** the portion of the flange of the second casing part (3) before the flange fold in cross-section is bent at an obtuse angle (α), forming a recess (8) for simplifying the application of the sealing compound (7).

6. A gas meter comprising the casing consisting of parts joined by a flanged joint according to any of the claims from 1 to 5.

7. The gas meter according to claim 6, **characterised in that** the casing comprises at least two parts, wherein the first casing part (2) constitutes a rear casing, and the second casing part (3) constitutes a front casing.

8. The gas meter according to claim 6 or 7, **characterised in that** in the first casing part (2) there are a gas inlet port (10) and a gas outlet port (11), and the second casing part (3) comprises mounting pins (13) and a communication terminal (12).

9. The gas meter according to any of the claims from 6 to 8, **characterised in that** it comprises a masking element (14) protecting the area of the flanged joint of the first casing part (2) and the second casing part (3).

10. The gas meter according to any of the claims from 6 to 9, **characterised in that** the first casing part (2) constituting the rear casing has a cross-sectional shape resembling the letter U, and it is arranged horizontally, and the second casing part (3) constituting the front casing has a rectangular shape and comprises a central recess (3A).

11. Method of producing a flanged joint of two parts of a casing subjected to internal pressure, especially a gas meter casing, **characterised in that** in the first step a circumferential groove (5) is made in the first casing part (2), and subsequently, in the second step, a flange fold is made in the second casing part (3), following which, in the third step, a sealing compound (7) is applied onto the inner surface of the flange fold of the second casing part (3), and afterwards, in the fourth step, the flange fold of the second casing part (3) is placed over the distal end (4) of the first casing part (2), so that the flange fold of the second casing part (3) surrounds the distal end (4) of the first casing part (2), and afterwards, in the fifth step, the flange fold of the second casing part (3) is bent and clamped on the distal end (4) of the first casing part (3), so that the flange fold of the second casing part (3) reaches the circumferential groove (5), and the distal end (4) of the first casing part (2) becomes surrounded.

12. Method of producing the flanged joint of two parts of the casing subjected to internal pressure, especially the gas meter casing, according to claim 11, **characterised in that** the first step or the second step are preceded by a step in which a fold (4A) is made on the distal end (4) of the first casing part (2).

13. Method of producing the flanged joint of two parts of the casing subjected to internal pressure, especially the gas meter casing, according to claim 11 or 12, **characterised in that** the portion of the flange (6) of the second casing part (3) before the flange fold is bent at an obtuse angle (α), forming a recess (8) simplifying the application of the sealing compound (7).
